Europäisches Patentamt

European Patent Office　　⑪　Numéro de publication: **0 180 844**

Office européen des brevets　　　　　　　　　　　**B1**

⑫　　　　　　　　FASCICULE DE BREVET EUROPEEN

(19)

㊺　Date de publication du fascicule du brevet:　　�51　Int. Cl.⁴: **G 01 N 25/02, G 01 N 7/00**
　　**26.07.89**

㉑　Numéro de dépôt: **85113362.9**

㉒　Date de dépôt: **22.10.85**

㊴　Cellule pour l'étude d'un produit fluide au moins en partie condensable.

㉚　Priorité: **23.10.84  FR 8416196**　　　　　　　�73　Titulaire: **ALSTHOM, 38, avenue Kléber, F-75784 Paris**
　　　　　　　　　　　　　　　　　　　　　　　　　　　　　**Cédex 16 (FR)**

㊸　Date de publication de la demande:
　　**14.05.86 Bulletin 86/20**　　　　　　　　　　　㉒　Inventeur: **Ollivaud, Bernard, Launay le Cellier,**
　　　　　　　　　　　　　　　　　　　　　　　　　　　　　**F-44850 Ligne (FR)**
　　　　　　　　　　　　　　　　　　　　　　　　　　　　　Inventeur: **Lebas, Jean-Marie, 93, rue de la Jarnigarnière,**
㊺　Mention de la délivrance du brevet:　　　　　　　**F-44115 Basse Goulaine (FR)**
　　**26.07.89 Bulletin 89/30**

㊤　Mandataire: **Weinmiller, Jürgen et al,**
　　　　　　　　　　　　　　　　　　　　　　　　　　　　　**Lennéstrasse 9 Postfach 24, D-8133 Feldafing (DE)**
㊽　Etats contractants désignés:
　　**AT BE CH DE FR GB IT LI LU NL SE**

㊶　Documents cités:
　　**FR-A- 2 474 196**
　　**US-A- 2 380 082**
　　**US-A- 2 662 393**

## Description

La présente invention concerne une cellule pour l'étude d'un produit fluide au moins en partie condensable.

De telles cellules sont notamment utilisées pour étudier les caractéristiques physiques de pression, volume, température des produits sortant des puits de prospection pétrolière, la connaissance de ces caractéristiques étant un élément fondamental pour le développement d'un champ pétrolier. Elles sont aussi utilisées pour l'étude des huiles légères, pour la détermination des réservoirs et aussi pour diverses autres applications telle que l'étude d'équilibre de phases etc . . . Elles permettent de tracer les différentes courbes de pression en fonction de la température pour des pourcentages donnés de phase vapeur par rapport au volume total du produit.

Une telle cellule, connue par exemple par le document de brevet US-A 2 380 082, comprend une enveloppe verticale cylindrique, résistante, comportant en son intérieur deux chambres superposées et communiquant entre elles, la chambre inférieure ayant un plus faible diamètre. L'enveloppe est pourvue au niveau de la chambre inférieure de hublots et de graduations permettant de visualiser et de mesurer le niveau de la surface de séparation entre la phase liquide et la phase gazeuse du produit à étudier. La chambre supérieure comporte un piston libre séparant cette chambre en deux parties. La partie supérieure est alimentée en mercure par le moyen d'une pompe à mercure permettant d'exercer les pressions de mesure désirées sur le piston libre. L'extrémité inférieure de la chambre inférieure est également alimentée en mercure de façon à permettre d'ajuster au bon niveau la surface de séparation liquide/gaz du produit étudié. La phase liquide dudit produit est en contact direct avec le mercure agissant comme piston. La cellule est placée dans une enceinte chauffante.

Un tel dispositif présente l'inconvénient d'utiliser du mercure, produit dangereux et qui rend l'installation onéreuse à cause notamment de l'installation de pompage. En outre, l'interface directe, dans la chambre inférieure, entre le mercure et la phase liquide du fluide étudié entraîne des précautions particulières, ou appareillages particuliers, au moment de la vidange de la cellule du produit étudié pour extraire le produit et lui seul, sans mélange de mercure. Enfin, certains produits peuvent contenir des composants qui peuvent plus ou moins s'allier avec le mercure.

La présente invention a donc pour but de réaliser une cellule sans mercure, et a pour objet une cellule pour l'étude d'un produit fluide au moins en partie condensable, comprenant un volume dans lequel est introduit le produit, volume délimité d'une part par une enveloppe et d'autre part par un piston dans une partie supérieure de l'enveloppe pouvant coulisser d'une manière étanche dans ladite enveloppe et associé à des moyens pour régler la pression du produit à étudier, et par des moyens dans une partie inférieure de l'enveloppe permettant d'ajuster le niveau de la surface de séparation gaz/liquide, ladite enveloppe étant munie de hublots associés à un marquage de façon à permettre la visualisation et la mesure du niveau de ladite surface, des moyens étant prévus entre le piston et lesdits moyens inférieurs pour introduire le produit à étudier dans ledit volume et pour vidanger le volume dudit produit, caractérisée en ce que lesdits moyens associés au piston supérieur comprennent une tige d'un premier vérin de commande, liée audit piston supérieur, et en ce que lesdits moyens inférieurs permettant l'ajustage du niveau de ladite surface de séparation gaz/liquide comprennent un piston inférieur lié à la tige d'un deuxième vérin de commande.

Selon une réalisation préférée de l'invention et afin que l'erreur de mesure du niveau de la surface de séparation liquide/gaz n'entraîne qu'une faible erreur en volume, ledit volume interne à ladite enveloppe comprend un étranglement au niveau desdits hublots de visualisation et de mesure, divisant ainsi ledit volume interne en une chambre supérieure et une chambre inférieure reliées par ledit étranglement constituant un canal de liaison.

Selon une réalisation préférée, ladite enveloppe comprend trois parties à savoir la partie supérieure renfermant ladite chambre supérieure, une partie intermédiaire comprenant lesdits hublots et traversée par ledit canal de liaison, et la partie inférieure renfermant ladite chambre inférieure, ladite partie inférieure et ledit deuxième vérin étant disposés horizontalement, ladite partie supérieure et ledit premier vérin étant légèrement inclinés par rapport à l'horizontale, et la partie intermédiaire étant située entre les deux dites parties supérieure et inférieure, du côté de leur extrémité la plus rapprochée l'une de l'autre, ledit canal de liaison étant vertical et débouchant dans le point le plus bas de ladite chambre supérieure.

Avantageusement, ladite inclinaison est de l'ordre de 15 degrés.

Selon une autre caractéristique, chaque piston, du côté opposé à sa liaison à sa tige de vérin est muni d'un dispositif d'agitation.

L'invention va maintenant être décrite en se référant au dessin annexé dans lequel:

La figure 1 montre une installation pour l'étude de produits fluides comportant une cellule selon l'invention.

La figure 2 est une vue agrandie montrant plus spécialement la cellule selon l'invention.

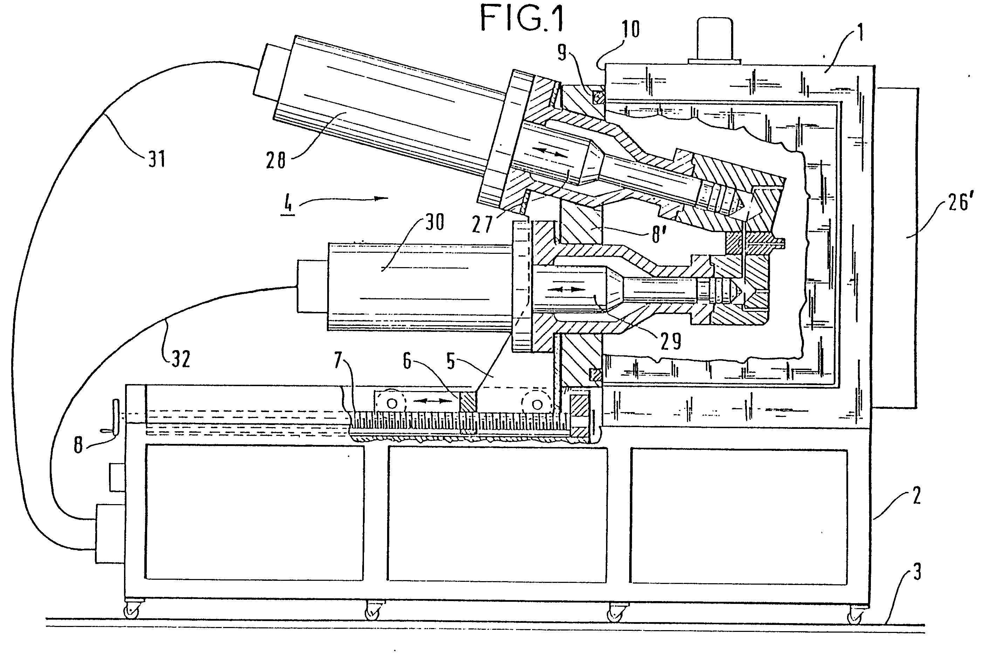

En se référant à la figure 1, l'ensemble comprend un enceinte thermostatée 1, réglable de −20 °C à +200 °C, solidaire d'un bâti 2 mobile sur rails 3, de la cellule proprement dite 4.

La cellule 4 est montée sur un chariot 5 qui peut se déplacer le long du bâti par le moyen d'un écrou 6 et d'une vis sans fin 7 manœuvrable par un volant 8.

La cellule 4 et son chariot 5 sont solidaires d'une porte 8' de fermeture de l'enceinte 1.

Cette porte est munie d'un joint 9 qui vient se plaquer contre la face 10 de l'enceinte.

Ainsi, par simple manœuvre du volant 8 on fait rentrer et sortir la cellule de l'enceinte et en même temps, on ouvre ou ferme la porte 8'.

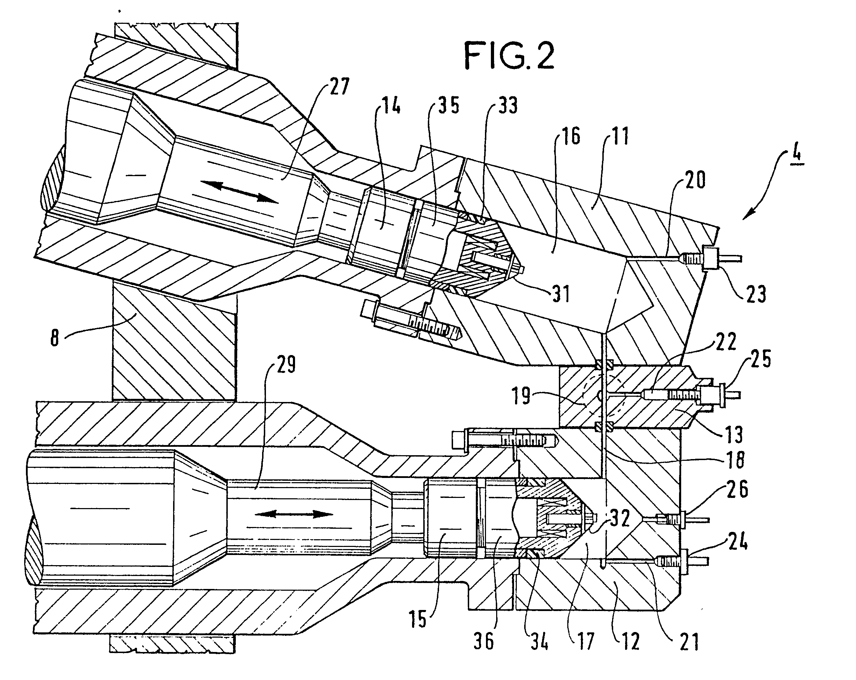

En se reportant maintenant à la figure 2, on va décrire plus précisément la cellule elle-même.

Elle comprend une enveloppe externe en trois parties: une partie supérieure 11, une partie inférieure 12 et une partie intermédiaire 13. Cette enveloppe est très résistante et calculée pour pouvoir supporter de très fortes pressions pouvant atteindre 1200 bars. Cette enveloppe délimite en son intérieur et entre un piston supérieur 14 et un piston inférieur 15 un volume interne comprenant une chambre supérieure 16 comprise dans la partie supérieure 11 de l'enveloppe, une chambre inférieure 17 comprise dans la partie inférieure 12 de l'enveloppe et un canal de liaison 18 reliant la chambre supérieure à la chambre inférieure, ce canal traversant la partie intermédiaire 13. Les chambres 16 et 17 sont cylindriques. La partie intermédiaire comporte d'une manière connue des hublots, généralement deux, disposés de part et d'autre du canal 18 dont l'un est un hublot d'éclairage et l'autre de visée.

Ces hublots comportent un système de marquage de manière à permettre de mesurer le niveau de la surface de séparation entre la phase liquide et la phase gazeuse du produit fluide à étudier, introduit dans le volume interne. On a figuré par un cercle repéré 19 le hublot situé derrière le canal de liaison 18 par rapport au plan de la figure.

Le canal 18 constitue ainsi un rétrécissement au niveau des hublots, permettant la mesure du volume interne à l'enveloppe en trois parties. Ce rétrécissement a pour but d'accroître la sensibilité de la variation du niveau de la surface de séparation liquide/gaz pour une variation donnée du volume de laphase liquide par exemple et donc d'améliorer la précision de la mesure. Les trois parties du volume interne: la chambre supérieure, la chambre inférieure et le canal de liaison comprennent des moyens permettant des introductions et des prélèvements de fluide. Il s'agit dans l'exemple représenté sur la figure 2, de canaux 20, 21, 22 munis de bouchons 23, 24 et 25, mais qui peuvent être facilement remplacés par des vannes motorisées commandées de l'extérieur de l'enceinte 1 à partir d'un boîtier de commande 26' (figure 1), la pénétration de la cellule 4 dans l'enceinte 1 réalisant l'accouplement des organes. De la même manière, la chambre inférieure 17 est munie de moyens 26 permettant le raccordement à un capteur de pression.

Le piston supérieur 14 est relié à la tige 27 d'un premier vérin hydraulique 28 (figure 1) et le piston inférieur 15 est relié à la tige 29 d'un deuxième vérin hydraulique 30 (figure 1).

Ces deux vérins 28 et 30 sont alimentés séparément par des conduits 31 et 32. Ils peuvent être asservis, selon les essais à effectuer, soit en position pour des mesures à volume constant, soit en force pour des mesures à pression constante. Bien évidemment, à la place des vérins hydrauliques 28 et 30 on peut utiliser des vérins de tout autre type, par exemple des vérins mécaniques.

Le piston inférieur 15 a pour fonction d'ajuster le niveau de la surface de séparation liquide/gaz et le piston supérieur 14 celui d'ajuster la pression.

Les axes des chambres supérieure et inférieure 16 et 17 ainsi que ceux des vérins 28 et 30 pourraient fort bien être alignés verticalement, cependant, on a préféré, pour des raisons d'encombrement, placer la chambre 17 et le second vérin 30 horizontalement et la chambre 16 avec son vérin 28 inclinés d'environ 15 degrés par rapport à l'horizontale. Cette inclinaison a pour but de faire en sorte qu'il ne risque pas d'y avoir quelques gouttes de liquide à rester dans la chambre supérieure 16, ce qui pourrait se produire si la chambre 16 était également horizontale.

La partie intermédiaire 13 de l'enveloppe est située entre la partie supérieure 11 et la partie inférieure 12, du côté de leur extrémité la plus rapprochée et de telle façon que le canal de liaison 18 soit vertical. Il dèbouche dans le point le plus bas de la chambre supérieure 16.

Chaque piston est muni à son extrémité libre d'une petite hélice d'agitation du fluide: 31 pour le piston 14 et 32 pour le piston 15.

Chaque piston est muni d'un joint respectivement 33 et 34 serré par une bague 35, 36 vissée sur le piston.

Avec une telle cellule, on réalise des mesures permettant de tracer des courbes par exemple de pression en fonction de la température pour un volume constant soit de volume en fonction de la température à pression constante.

Les hublots et les marques permettent de mesurer le niveau de la séparation gaz-liquide et de déterminer immédiatement le volume du liquide.

**Revendications**

1. Cellule (4) pour l'étude d'un produit fluide au moins en partie condensable, comprenant un volume (16, 17, 18) dans lequel est introduit le produit, volume délimité d'une part par une enveloppe (11, 12, 13) et d'autre part par un piston (14) dans une partie supérieure de l'enveloppe pouvant coulisser d'une manière étanche dans ladite enveloppe et associé à des moyens pour régler la pression du produit à étudier, et par des moyens dans une partie inférieure de l'enveloppe permettant d'ajuster le niveau de la surface de séparation gaz/liquide, ladite enveloppe étant munie de hublots (19) associés à un marquage de façon à permettre la visualisation et la mesure du niveau de ladite surface, des moyens (20, 21) étant prévus entre le piston et lesdits moyens inférieurs pour introduire le produit à étudier dans ledit volume et pour vidanger le volume dudit produit, caractérisée en ce que lesdits moyens associés au piston supérieur comprennent une tige (27) d'un premier vérin de commande, liée audit piston supérieur, et en ce que lesdits moyens inférieurs permettant l'ajustage du niveau de ladite surface de séparation gaz/liquide comprennent un piston inférieur (15) lié à la tige (29) d'un deuxième vérin de commande.

2. Cellule selon la revendication 1, caractérisée en ce qu'au niveau desdits hublots de visualisation et de mesure, ledit volume interne comprend un étranglement, divisant ainsi ledit volume en une chambre supérieure (16) et une chambre inférieure (17) reliées par ledit étranglement constituant un canal de liaison (18).

3. Cellule selon la revendication 2, caractérisée en ce que ladite enveloppe comprend trois parties, à savoir la partie supérieure (11) renfermant ladite chambre supérieure, une partie intermédiaire (13) comprenant lesdits hublots et traversée par ledit canal de liaison, et la partie inférieure (12) renfermant ladite chambre inférieure, ladite partie inférieure et ledit deuxième vérin étant disposés horizontalement, ladite partie supérieure et ledit premier vérin étant légèrement inclinés par rapport à l'horizontale, et la partie intermédiaire étant située entre les deux dites parties supérieure et inférieure, du côté de leur extrémité la plus rapprochée l'une de l'autre, ledit canal de liaison étant vertical et débouchant dans le point le plus bas de ladite chambre supérieure.

4. Cellule selon la revendication 3, caractérisée en ce que ladite inclinaison est de l'ordre de 15 degrés.

5. Cellule selon l'une des revendications 1 à 4, caractérisée en ce que chaque piston, du côté opposé à sa liaison à sa tige de vérin est muni d'un dispositif d'agitation (31, 32).

**Patentansprüche**

1. Zelle (4) zur Untersuchung eines zumindest teilweise kondensierbaren flüssigen Produkts, mit einem Volumen (16, 17, 18), in das das Produkt eingeführt wird, wobei das Volumen einerseits durch eine Hülle (11, 12, 13) und andererseits durch einen Kolben (14) im oberen Bereich der Hülle, der dicht in der Hülle gleiten kann und mit Mitteln verbunden ist, um den Druck des zu untersuchenden Produkts einzustellen, und durch Mittel im unteren Bereich der Hülle begrenzt wird, die es ermöglichen, den Pegel der Trennfläche zwischen flüssiger und gasförmiger Phase zu regulieren, wobei die Hülle mit Fenstern (19) verbunden mit einer Markierung versehen ist, um die Sichtbarmachung und die Messung des Pegels der Trennfläche zu ermöglichen, wobei zwischen dem Kolben und den unteren Mitteln Mittel (20, 21) vorgesehen sind, um das zu untersuchende Produkt in das Volumen einzuführen und um das Produkt aus dem Volumen zu entleeren, dadurch gekennzeichnet, dass die dem oberen Kolben zugeordneten Mittel eine Stange (27) eines ersten Steuergliedes aufweisen, da mit dem oberen Kolben verbunden ist, und dass die unteren Mittel, die die Einstellung der Höhe der Trennfläche zwischen flüssiger und gasförmiger Phase ermöglichen, einen unteren Kolben (15) aufweisen, der mit der Stange (29) eines zweiten Steuergliedes verbunden ist.

2. Zelle nach Anspruch 1, dadurch gekennzeichnet, dass das innere Volumen der Hülle eine Verengung in Höhe der Fenster zur Sichtbarmachung und zur Messung enthält, die so das innere Volumen in eine obere Kammer (16) und eine untere Kammer (17) aufteilt, welche durch die einen Verbindungskanal (18) bildende Verengung miteinander verbunden sind.

3. Zelle nach Anspruch 2, dadurch gekennzeichnet, dass die Hülle drei Bereiche, nämlich den oberen Bereich (11), der die obere Kammer einschliesst, einen Zwischenbereich (13), der die Fenster aufweist und vom Verbindungskanal durchquert wird, und den die untere Kammer einschliessenden unteren Bereich (12) aufweist, wobei der untere Bereich und das zweite Steuerglied waagrecht angeordnet sind, der obere Bereich und das erste Steuerglied leicht geneigt in Bezug auf die Waagrechte sind und der Zwischenbereich zwischen dem oberen und dem unteren Bereichen auf der Seite ihrer einander am nächsten liegenden Enden angeordnet ist, wobei der Verbindungskanal senkrecht verläuft und in den untersten Punkt der oberen Kammer mündet.

4. Zelle nach Anspruch 3, dadurch gekennzeichnet, dass die Neigung etwa 15° beträgt.

5. Zelle nach einem der Ansprüche 1 bis 4, dadurch gekennzeichnet, dass jeder Kolben auf der seiner Verbindung mit der Stange des Steuergliedes abgewandten Seite mit einer Umrührvorrichtung (31, 32) ausgestattet ist.

**Claims**

1. A cell (4) for examining a fluid which is at least in part condensable, comprising a volume (16, 17, 18) into which the fluid is introduced, said volume being delimited on the one hand by an envelope (11, 12, 13) and on the other hand by a piston (14) in the upper part of the envelope, said piston being capable of sliding in a sealed manner in said envelope and being associated with means for adjusting the pressure of the fluid to be examined, and by means in the lower part of the envelope permitting the level of the gas/liquid interface to be adjusted, said envelope being provided with windows (19) associated with a marking in order to permit the display and the measurement of the level of said interface, means (20, 21) being provided between the piston and said lower means for introducing the fluid to be examined into said volume and for emptying said volume of said fluid, characterized in that said means associated with the upper piston comprise a rod (27) of a first control actuator linked to said piston, and in that said lower means for adjusting the level of said gas/liquid interface comprise a lower piston (15) connected to the rod (29) of a seccond control actuator.

2. A cell according to claim 1, characterized in that said inner volume comprises a restriction at the level of said windows for displaying and for measurement, thus dividing said volume into an upper chamber (16 and a lower chamber (17) which are interconnected by said restriction which constitutes a connection channel (18).

3. A cell according to claim 2, characterized in that said envelope comprises three parts, namely the upper part (11) enclosing said upper chamber, an intermediate part (13) comprising said windows and having said connection channel passing therethrough, and the lower part (12) enclosing said lower chamber, said lower part and said second actuator being disposed horzontally, said upper part and said first actuator being slightly inclined relative to the horizontal, and the intermediate part being situated between said two upper and lower parts at their ends which are closest together, said connection channel being vertical and opening out into the lowest point of said upper chamber.

4. A cell according to claim 3, characterized in that said inclination is about 15°.

5. A cell according to one of claims 1 to 4, characterized in that each piston is provided with an agitator device (31, 32) on its side opposite to its connection with its actuator rod.

FIG.1

FIG.2